# EUROPÄISCHE PATENTSCHRIFT

(11) **EP 1 280 384 B1**
(45) Veröffentlichungstag und Bekanntmachung des Hinweises auf die Patenterteilung: **16.07.2008**
(21) Anmeldenummer: 02011283.5
(22) Anmeldetag: 22.05.2002
(51) Int. Cl.: H05B 39/04, G05F 1/652

(54) **Dimm-Modul**
Dimming module
Module gradateur

(30) Priorität: 27.07.2001 DE 10136658
(43) Veröffentlichungstag der Anmeldung: 29.01.2003
(73) Patentinhaber: Patent-Treuhand-Gesellschaft für elektrische Glühlampen mbH, 81543 München (DE)
(72) Erfinder: Scilla, Giovanni, 31057 Silea (TV) (IT)
(74) Vertreter: Raiser, Franz

(56) Entgegenhaltungen:
- EP-A- 0 716 485
- DE-A- 19 943 256
- US-A- 4 668 906
- US-A- 4 719 404
- US-A- 5 631 523
- US-A- 5 811 940

## Beschreibung

### Technisches Gebiet

Die Erfindung geht aus von einem Dimm-Modul gemäß dem Oberbegriff des Anspruchs 1. Es handelt sich dabei insbesondere um ein Dimm-Modul, das für eine Gleichstrom- oder Gleichspannungsquelle eine variable Zusatzlast bereit stellt.

### Stand der Technik

In den Schriften US 4,668,906 und US 4,719,404 (Ekstrand) ist eine Versorgungsschaltung für einen Ionen-Laser beschrieben. Parallel zum Laser ist eine Serienschaltung aus einem Widerstand und einem schnellen Schalter geschaltet. Mittels des schnellen Schalters kann die Stromaufnahme des Lasers geregelt werden. In Serie zum Laser können können mittles langsamer Schalter verschiedene Widerstände geschaltet werden, um den Maximalstrom durch den Laser auf verschiedene Werte zu begrenzen.

In der Schrift DE 199 43 256 A1 (Gronemeyer) ist eine Vorrichtung zum Betrieb von LEDs an einer gleichgerichteten Wechselspannung beschrieben. Unter einer bestimmten Schwellspannung führen die LEDs naturgemäß keinen Strom. Um eine Verzerrung der Form des von der Vorrichtung aufgenommenen Stroms zu vermeiden, ist parallel zu den LEDs ein Bypass geschaltet, der dann Strom führt, wenn die LEDs keinen Strom führen.

Oft besteht der Wunsch, dass die Leistung, die eine Gleichstrom- oder Gleichspannungsquelle an eine Last abgibt, abhängig von einer gewünschten Dimmstellung einstellbar ist. Dazu wird die Last nicht direkt an die Gleichstrom- oder Gleichspannungsquelle angeschlossen, sondern es wird ein Dimm-Modul zwischen die Gleichstrom- oder Gleichspannungsquelle und die Last geschaltet. Unter Gleichstrom- oder Gleichspannungsquelle sind nicht ausschließlich ideale Quellen zu verstehen, sondern auch Quellen, die einen endlichen Quellwiderstand aufweisen. Unter Last sind elektrische Verbraucher zu verstehen, wie es z. B. Glühlampen oder Leuchtdioden sind. Unter Dimmstellung wird die an die Last abgegebene Leistung, bezogen auf die maximal abgebbare Leistung verstanden. Meist wird die Dimmstellung in % ausgedrückt.

Ein Problem entsteht dadurch, dass viele Gleichstrom- oder Gleichspannungsquellen, insbesondere solche, die getaktete Wandler enthalten, eine Minimallast erfordern. Bei niedriger Dimmstellung arbeitet die Gleichstrom- oder Gleichspannungsquelle nicht mehr stabil. Entsprechend dem Stand der Technik wird dieses Problem dadurch gelöst, dass das Dimm-Modul einen Widerstand enthält, der permanent eine Leistung von der Gleichstrom- oder Gleichspannungsquelle bezieht. Der Begriff Widerstand ist in diesem Zusammenhang weit zu fassen: Die gewünschte Wirkung kann jedes elektrische Bauelement erfüllen, das eine Impedanz mit einem Realteil aufweist. Der Wert des Widerstandes ist so bemessen, dass auch für den Fall, dass die Last keine Leistung mehr aufnimmt, die Gleichstrom- oder Gleichspannungsquelle stabil arbeitet. Nachteil dieser Lösung ist, dass auch bei einer hohen Dimmstellung, bei der der Widerstand zur Stabilisierung nicht mehr nötig ist, der Widerstand Leistung aufnimmt. Dadurch wird unnötig Leistung verbraucht. Dies nicht nur im Widerstand, sondern auch in der Gleichstrom- oder Gleichspannungsquelle, die bedingt durch den Widerstand eine höhere Ausgangsleistung liefern muss. Zudem muss die Gleichstrom- oder Gleichspannungsquelle für eine Leistung ausgelegt sein, die der Summe der Leistungen entspricht, die von der Last und vom Widerstand aufgenommen werden.

### Darstellung der Erfindung

Es ist Aufgabe der vorliegenden Erfindung, ein Dimm-Modul gemäß dem Oberbegriff des Anspruchs 1 bereitzustellen, das einen Widerstand enthält, der nur bei niedriger Dimmstellung die zur Stabilisierung der Gleichstrom- oder Gleichspannungsquelle nötige Leistung aufnimmt.

Diese Aufgabe wird durch ein Dimm-Modul mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Erfindungsgemäß wird die Leistung, die der Widerstand aufnimmt, indirekt proportional zur Dimmstellung gewählt. Dies kann für einen gesamten Dimmbereich von 0% bis 100% gelten. Bei einer Dimmstellung von 0% nimmt der Widerstand die Minimalleistung auf, für einen stabilen Betrieb der Gleichstrom- oder Gleichspannungsquelle nötig ist. Bei Erhöhung der Dimmstellung wird die vom Widerstand aufgenommene Leistung reduziert. Bei 100% Dimmstellung nimmt der Widerstand keine Leistung auf. Der lineare Zusammenhang zwischen Dimmstellung und der vom Widerstand aufgenommenen Leistung kann auch auf einen Bereich für die Dimmstellung eingeschränkt sein. Unterhalb einer gegebenen Dimmstellung nimmt in diesem Fall der Widerstand konstant die Minimalleistung auf, die für einen stabilen Betrieb der Gleichstrom- oder Gleichspannungsquelle nötig ist. Oberhalb einer gegebenen weiteren Dimmstellung ist die vom Widerstand aufgenommene Leistung konstant Null.

Zur Einstellung der von der Last aufgenommenen Leistung wird die Last bevorzugt gepulst betreiben. Für die von der Last aufgenommene Leistung gibt es einen Ein-Zustand, in dem die maximal von der Gleichstrom- oder Gleichspannungsquelle an die Last abgebbare Leistung an die Last abgegeben wird und einen Aus-Zustand, in dem die an die Last abgegebene Leistung Null ist. Das Verhältnis der Länge der Zeitintervalle in denen jeweils ein Zustand angenommen wird, bestimmt die mittlere Leistung, die an die Last abgegeben wird. Erfindungsgemäß wird an den Widerstand nur im Aus-Zustand Leistung abgegeben. Wird mehr mittlere Leistung an die Last abgegeben, verkürzt sich erfindungsgemäß die Zeit, in der Leistung an den Widerstand abgegeben wird und damit auch die mittlere Leistung, die an den Widerstand abgegeben wird. Da die Gleichstrom- oder Gleichspannungsquelle entweder an die Last oder an den Widerstand Leistung abgibt, muss die Quelle nie die Summe beider Leistungen liefern. Die Gleichstrom- oder Gleichspannungsquelle kann somit schwächer ausgelegt werden und verbraucht weniger Verlustleistung.

### Beschreibung der Zeichnungen

Im folgenden soll die Erfindung anhand von Ausführungsbeispielen näher erläutert werden. Es zeigen:
- Figur 1: ein Blockschaltbild eines Ausführungsbeispiels eines erfindungsgemäßen Dimm-Moduls,
- Figur 2: den zeitlichen Verlauf von erfindungsgemäßen Steuersignalen,
- Figur 3: ein Blockschaltbild eines weiteren Ausführungsbeispiels eines erfindungsgemäßen Dimm-Moduls,
- Figur 4: ein Blockschaltbild eines zu Fig. 3 dualen Ausführungsbeispiels eines erfindungsgemäßen Dimm-Moduls

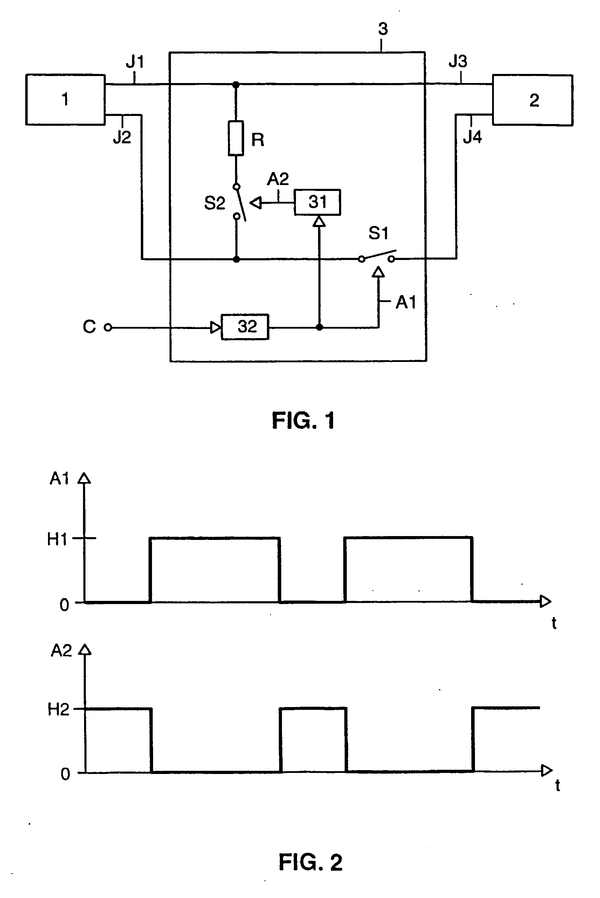

In Fig. 1 ist ein Blockschaltbild eines Ausführungsbeispiels eines erfindungsgemäßen Dimm-Moduls dargestellt. Das Dimm-Modul 3 besitzt zwei Quellanschlüsse J1 und J2 an denen eine Gleichstrom- oder Gleichspannungsquelle 1 Leistung in das Dimm-Modul einspeist. Das Dimm-Modul 3 besitzt zwei Lastanschlüsse J3 und J4 an denen eine Last 2 angeschlossen ist. Im Dimm-Modul 3 sind die Anschlüsse J1 und J3 verbunden. Der gepulste Betrieb der Last wird dadurch realisiert, dass die Anschlüsse J2 und J4 über einen Schalter S 1 miteinander verbunden sind. Der Schalter S1 liegt somit in Serie zu einem Lastanschluss. Der Schalter S 1 wird von einem Steuersignal A1 gesteuert. Im oberen Abschnitt von Fig.2 ist beispielhaft der Verlauf des Steuersignals A1 über der Zeit t dargestellt. Nimmt das Steuersignal A1 den Wert H1 an, ist der Schalter S1 geschlossen und das Dimm-Modul befindet sich im Ein-Zustand. Nimmt das Steuersignal den Wert 0 an ist der Schalter S 1 offen und das Dimm-Modul befindet sich im Aus-Zustand. Im Beispiel in Fig. 2 ist eine Dimmstellung von ca. 66% eingestellt.

Parallel zu den Quellanschlüssen J1 und J2 in Fig. 1 ist die Serienschaltung aus einem Widerstand R und einem Schalter S2 geschaltet. Der Schalter S2 wird von einem Steuersignal A2 gesteuert. Im unteren Abschnitt von Fig.2 ist beispielhaft der Verlauf des Steuersignals A2 über der Zeit t dargestellt. Erfindungsgemäß ist dieser Verlauf invers zum Verlauf des Steuersignals A1. Immer wenn der Schalter S1 geschlossen ist und Leistung an die Last abgegeben wird, ist der Schalter S2 geöffnet und der Widerstand R nimmt keine Leistung auf. Im umgekehrten Fall ist der Schalter S 1 geöffnet und der Schalter S2 geschlossen. Dann wird nur Leistung an den Widerstand R abgegeben.

Gemäß Fig. 1 steuert das Steuersignal A1 nicht nur den Schalter S1, vielmehr wird es zusätzlich in einen Inverter 31 eingespeist. Der Inverter 31 gibt das Steuersignal A1 an seinem Ausgang invertiert als Steuersignal A2 an den Schalter S2 aus.

Erzeugt wird das Steuersignal A1 von einer Auswerteeinrichtung 32. Die Auswerteeinrichtung 32 besitzt einen Kontrolleingang C, mit dessen Hilfe die Information über die gewünschte Dimmstellung dem Dimm-Modul 3 zugeführt wird. Die Auswerteeinrichtung 32 wertet diese Information aus und erzeugt ein Steuersignal A1, das die gewünschte Dimmstellung realisiert. Bevorzugt wird für die Auswerteeinrichtung 32 ein Pulsweitenmodulator eingesetzt.

Der Kontrolleingang C muss nicht zwangsläufig seine Information von außerhalb des Dimm-Moduls 3 beziehen. Es ist auch möglich, dass beispielsweise eine Potentiometereinstellung oder eine Stellung eines Wahlschalters innerhalb des Dimm-Moduls 3 die Dimmstellung festlegt.

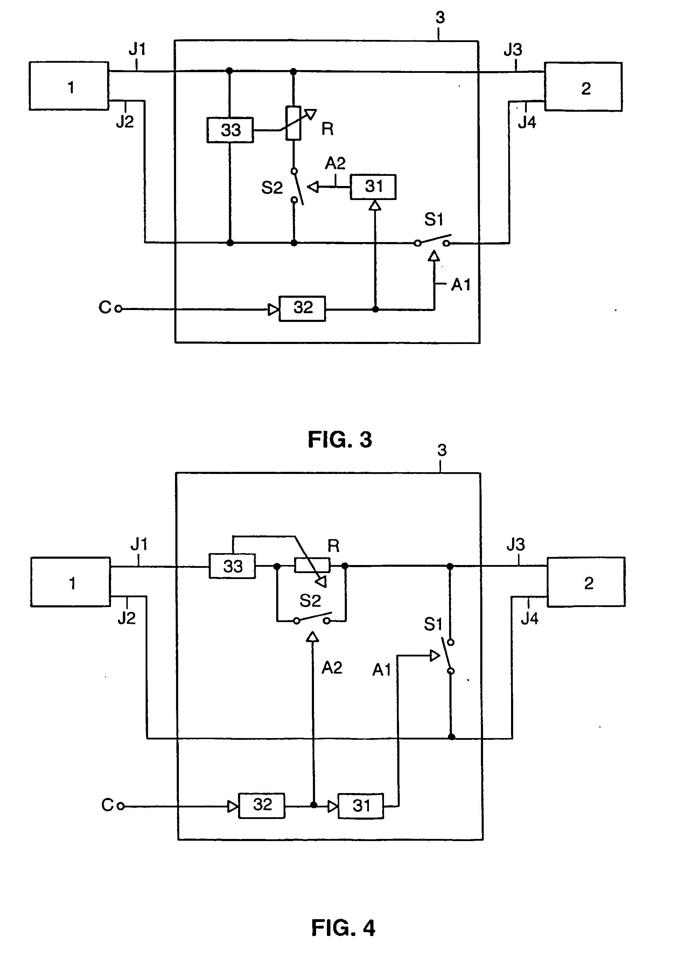

In Fig. 3 ist ein Blockschaltbild eines weiteren Ausführungsbeispiels eines erfindungsgemäßen Dimm-Moduls dargestellt. Im wesentlichen entspricht es dem Ausführungsbeispiel in Fig.1. Gleiche bzw. gleich wirkende Elemente tragen in beiden Figuren die gleiche Bezeichnung. Bezüglich Fig. 1 ist in Fig. 3 eine Spannungsmesseinrichtung 33 hinzugefügt. Sie ist parallel zu den Quellanschlüssen J1 und J2 geschaltet. Ihr Zweck wird im folgenden beschrieben: Ist das Dimm-Modul 3 zum Betrieb an unterschiedlichen Gleichstrom- oder Gleichspannungsquellen 1 vorgesehen, so kann es nötig sein, dass der Wert des Widerstands R abhängig von der Quellspannung, die an den Quellanschlüssen J1 und J2 anliegt, gemacht wird. Die Spannungsmesseinrichtung 33 wertet die Quellspannung aus und stellt den dazu vorgesehenen Wert für den Widerstand R ein. Die Auswertung der Quellspannung kann auf unterschiedliche Weise geschehen: Es kann z. B. erst ein Mittelwert der Quellspannung gebildet werden und dieser dann mit einer vorgegebenen Schwelle verglichen werden. Dies ist vorteilhaft, wenn der Wert der Quellspannung starken Schwankungen unterliegt. Die Auswertung der Quellspannung kann auch zeitabhängig sein: Z. B. kann die Auswertung nur in Zeitabschnitten erfolgen, in denen der Schalter S2 geschlossen ist; diese Variante ist zu wählen, falls die Einstellung des Werts des Widerstandes R unabhängig von der Last sein soll. Die Einstellung selbst kann mit Hilfe eines Relais geschehen, das unterschiedliche Widerstände zuschaltet. Es ist aber auch denkbar, dass der Widerstand R als elektronisch steuerbarer Widerstand (z.B. MOSFET) ausgeführt ist, der von der Spannungsmesseinrichtung 33 gesteuert wird.

Die Information darüber, welcher Wert für den Widerstand R erforderlich ist, damit die Gleichspannungs- oder Gleichstromquelle in der niedrigsten Dimmstellung stabil arbeitet, kann von der Gleichspannungs- oder Gleichstromquelle dem Dimm-Modul auch auf separatem Wege zugeführt werden. In diesem Fall kann auf die Auswertung der Quellspannung verzichtet werden. Allerdings ist zusätzlicher Aufwand für die o.g. Informationsübermittlung nötig. Dies kann in Form einer zusätzlichen elektrischen Leitung von der Gleichspannungs- oder Gleichstromquelle zum Dimm-Modul geschehen. Falls eine zusätzliche Leitung nicht gewünscht wird kann z. B. ein Kodierstecker verwendet werden, der die Erfordernisse der Gleichspannungs- oder Gleichstromquelle bezüglich des Werts des Widerstandes R dem Dimm-Modul zugänglich macht. Der Vorteil eines Kodiersteckers ist darin zu sehen, dass in der Gleichspannungs- oder Gleichstromquelle selbst kein Eingriff nötig ist und damit eine beliebige Gleichspannungs- oder Gleichstromquelle gewählt werden kann.

In Fig. 4 ist ein Blockschaltbild eines weiteren Ausführungsbeispiels eines erfindungsgemäßen Dimm-Moduls dargestellt. Bezüglich den Ausführungsbeispielen in Fig. 1 und 3 ist in Fig. 4 eine dazu duale Schaltung dargestellt. Gleiche bzw. gleich wirkende Elemente tragen in beiden Figuren die gleiche Bezeichnung. Die Bemerkungen zur Wirkungsweise und Ausführung der Elemente aus Fig. 1 und 3 können auf Fig. 4 übertragen werden. Die Ausführungsbeispiele in den Fig. 1 und 3 sind bevorzugt bei Quellen 1 zu verwenden, die den Charakter eine Spannungsquelle haben. Das gilt in den Fällen, in denen der Quellwiderstand einer Quelle 1 kleiner ist als der wirksame Widerstand einer Last 2. Umgekehrt ist eine Ausführung gemäß Fig. 4 zu wählen falls eine Quelle 1 den Charakter einer Stromquelle hat. Dies ist dann der Fall, wenn der Quellwiderstand der Quelle 1 größer ist als der wirksame Widerstand einer Last 2.

Der Schalter S1 ist in Fig. 4 parallel zu den Lastanschlüssen J3 und J4 geschaltet. Damit wird im Gegensatz zu den Ausführungsbeispielen in Fig. 1 und 3 nur Leistung in die Last 2 eingespeist, wenn der Schalter S1 geöffnet ist. Der Widerstand R ist in Fig. 4 seriell zu einem Quellanschluss J1 geschaltet und der Schalter S2 parallel dazu geschaltet. In den Widerstand R wird dann Leistung eingespeist, wenn der Schalter S2 geöffnet ist. Eine Auswerteeinrichtung 32 liefert das gleiche Signal wie in den Ausführungsbeispielen in Fig. 1 und Fig. 3. Da die Schalter S1 und S2 im Vergleich zu den Ausführungsbeispielen in Fig. 1 und Fig. 3 nun umgekehrte Wirkung haben, steuert die Auswerteeinrichtung 32 in Fig. 4 direkt den Schalter S2, während der Schalter S1 über einen Inverter 31 gesteuert wird.

Eine Strommesseinrichtung 33 ist seriell zum Widerstand R geschaltet. Sie stellt den Wert des Widerstandes R passend zur Quelle 1 ein. Passend bedeutet in diesem Zusammenhang, dass der Wert des Widerstandes R so gewählt wird, dass die Quelle 1 in der niedrigsten Dimmstellung stabil arbeitet. Ist das Dimm-Modul 3 nur für einen Typ von Quellen 1 vorgesehen, kann die Strommesseinrichtung 33 entfallen.

## Patentansprüche

1. Dimm-Modul (3), mit Quell- und Lastanschlüssen (J1, J2, J3, J4), das zwischen eine Gleichstrom- oder Gleichspannungsquelle (1) und eine Last (2) geschaltet ist und das eine Einstellung der mittleren, von der Last (2) aufgenommenen Leistung ermöglicht,
**dadurch gekennzeichnet, dass** das Dimm-Modul (3) einen Widerstand (R) enthält, der innerhalb eines Dimmbereichs eine mittlere Leistung aufnimmt, die indirekt proportional zur von der Last (2) aufgenommenen mittleren Leistung ist, wobei das Dimm-Modul (3) weiterhin durch folgende Merkmale **gekennzeichnet** ist:
--- seriell zu einem Lastanschluss (J3, J4) ist ein erster Schalter (S1) geschaltet, der von einem ersten Steuersignal (A1) gesteuert wird,
--- seriell zum Widerstand (R) ist ein zweiter Schalter (S2) geschaltet, der von einem zweiten Steuersignal (A2) gesteuert wird,
--- erstes und zweites Steuersignal (A1, A2) sind invers zueinander.

2. Dimm-Modul (3), mit Quell- und Lastanschlüssen (J1, J2, J3, J4), das zwischen eine Gleichstrom- oder Gleichspannungsquelle (1) und eine Last (2) geschaltet ist und das eine Einstellung der mittleren, von der Last (2) aufgenommenen Leistung ermöglicht,
**dadurch gekennzeichnet, dass** das Dimm-Modul (3) einen Widerstand (R) enthält, der innerhalb eines Dimmbereichs eine mittlere Leistung aufnimmt, die indirekt proportional zur von der Last (2) aufgenommenen mittleren Leistung ist, wobei das Dimm-Modul (3) weiterhin durch folgende Merkmale **gekennzeichnet** ist:
--- parallel zu den Lastanschlüssen (J3, J4) ist ein erster Schalter (S1) geschaltet, der von einem ersten Steuersignal (A1) gesteuert wird,
--- parallel zum Widerstand (R) ist ein zweiter Schalter (S2) geschaltet, der von einem zweiten Steuersignal (A2) gesteuert wird,
--- erstes und zweites Steuersignal (A1, A2) sind invers zueinander.

3. Dimm-Modul (3) gemäß Anspruch 1 und 2, **dadurch gekennzeichnet, dass** das Dimm-Modul (3) einen Inverter (31) enthält, der das erste Steuersignal (A1) aus dem zweiten (A2) generiert.

4. Dimm-Modul (3) gemäß Anspruch 3, **dadurch gekennzeichnet, dass** das Dimm-Modul (3) einen Kontroll-Eingang (C) und eine Auswerteeinrichtung (32) besitzt, wobei dem Kontroll-Eingang (C) ein Signal zugeführt wird, das eine Information über die gewünschte Dimmstellung enthält und die Auswerteeinrichtung (32) diese Information benützt, um das erste Steuersignal (A1) zu erzeugen.

5. Dimm-Modul (3) gemäß Anspruch 1, **dadurch gekennzeichnet, dass** es sich bei der Last (2) um eine Leuchtdiode handelt.

6. Dimm-Modul (3) gemäß Anspruch 1, **dadurch gekennzeichnet, dass** das Dimm-Modul (3) eine Spannungs- oder Strommess-Einrichtung (33) enthält, die eine Veränderung des Werts des Widerstandes (R) abhängig vom Wert der oder des von der Gleichspannungs- oder Gleichstromquelle (1) gelieferten Spannung oder Stroms bewirkt.

7. Dimm-Modul (3) gemäß Anspruch 1, **dadurch gekennzeichnet, dass** die Information über den Wert des Widerstands (R), von der Gleichspannungs- oder Gleichstromquelle (1) dem Dimm-Modul (3) auf separatem Wege zugeführt wird.

## Claims

1. Dimming module (3), with source and load terminals (J1, J2, J3, J4), which is connected between a direct current or direct voltage source (1) and a load (2) and which makes it possible to set the average power consumed by the load (2), **characterized in that** the dimming module (3) contains a resistor (R), which, within a dimming range, consumes an average power which is indirectly proportional to the average power consumed by the load (2), the dimming module (3) furthermore being **characterized by** the following features:
--- a first switch (S1), which is controlled by a first control signal (A1), is connected in series with a load terminal (J3, J4),
--- a second switch (S2), which is controlled by a second control signal (A2), is connected in series with the resistor (R),
--- the first and second control signals (A1, A2) are inverse with respect to one another.

2. Dimming module (3), with source and load terminals (J1, J2, J3, J4), which is connected between a direct current or direct voltage source (1) and a load (2) and which makes it possible to set the average power consumed by the load (2), **characterized in that** the dimming module (3) contains a resistor (R), which, within a dimming range, consumes an average power which is indirectly proportional to the average power consumed by the load (2), the dimming module (3) furthermore being **characterized by** the following features:
--- a first switch (S1), which is controlled by a first control signal (A1), is connected in parallel with the load terminals (J3, J4),
--- a second switch (S2), which is controlled by a second control signal (A2), is connected in parallel with the resistor (R),
--- the first and second control signals (A1, A2) are inverse with respect to one another.

3. Dimming module (3) according to Claims 1 and 2, **characterized in that** the dimming module (3) contains an inverter (31), which generates the first control signal (A1) from the second (A2).

4. Dimming module (3) according to Claim 3, **characterized in that** the dimming module (3) has a monitoring input (C) and an evaluation device (32), a signal, which contains information on the desired dimming setting, being supplied to the monitoring input (C), and the evaluation device (32) using this information to produce the first control signal (A1).

5. Dimming module (3) according to Claim 1, **characterized in that** the load (2) is a light-emitting diode.

6. Dimming module (3) according to Claim 1, **characterized in that** the dimming module (3) contains a voltage or current measurement device (33), which brings about a change in the resistance value of the resistor (R) as a function of the value of the voltage or current provided by the direct voltage or direct current source (1).

7. Dimming module (3) according to Claim 1, **characterized in that** the information on the resistance value of the resistor (R) is fed from the direct voltage or direct current source (1) to the dimming module (3) using a separate route.

## Revendications

1. Module (3) gradateur, ayant des bornes (J1, J2, J3, J4) de source et de charge, qui est monté entre une source (1) de courant continu ou de tension continue et une charge (2) et qui permet d'avoir un réglage de la puissance moyenne absorbée par la charge (2),
**caractérisé en ce que** le module (3) gradateur comporte une résistance (R) qui absorbe dans une plage de gradation une puissance moyenne inversement proportionnelle à la puissance moyenne absorbée par la charge (2), le module (3) gradateur étant **caractérisé, en outre, par** des caractéristiques suivantes :
- il est monté en série avec une borne (J3, J4) de charge un premier interrupteur (S1) qui est commandé par un signal (A1) de commande,
- il est monté en série avec la résistance (R) un deuxième interrupteur (S2) qui est commandé par un deuxième signal (A2) de commande,
- le premier et le deuxième signal (A1, A2) de commande sont inverses l'un de l'autre.

2. Module (3) gradateur, ayant des bornes (J1, J2, J3, J4) de source et de charge, qui est monté entre une source (1) de courant continu ou de tension continue et une charge (2) et qui permet d'avoir un réglage de la puissance moyenne absorbée par la charge (2),
**caractérisé en ce que** le module (3) gradateur comporte une résistance (R) qui absorbe dans une plage de gradation une puissance moyenne inversement proportionnelle à la puissance moyenne absorbée par la charge (2), le module (3) gradateur étant **caractérisé, en outre, par** des caractéristiques suivantes :
- il est monté en parallèle aux bornes (J3, J4) de charge un premier interrupteur (S1) qui est commandé par un premier signal (A1) de commande,
- il est monté en série avec la résistance (R) un deuxième interrupteur (S2) qui est commandé par un deuxième signal (A2) de commande,
- le premier et le deuxième signal (A1, A2) de commande sont inverses l'un de l'autre.

3. Module (3) gradateur suivant la revendication 1 ou 2, **caractérisé en ce que** le module (3) gradateur comporte un inverseur (31) qui produit le premier signal (1) de commande à partir du deuxième (A2).

4. Module (3) gradateur suivant la revendication 3, **caractérisé en ce que** le module (3) gradateur a une entrée (C) de contrôle et un dispositif (32) d'exploitation, dans lequel il est envoyé à l'entrée (C) de contrôle un signal qui contient une information sur la position de gradation souhaitée et le dispositif (32) d'exploitation utilise cette information pour produire le premier signal (A1) de commande.

5. Module (3) gradateur suivant la revendication 1, **caractérisé en ce que** la charge (2) est une diode électroluminescente.

6. Module (3) gradateur suivant la revendication 1, **caractérisé en ce que** le module (3) gradateur comporte un dispositif (33) de mesure de la tension et du courant qui provoque une modification de la valeur de la résistance (R) en fonction de la valeur de la tension ou du courant fourni par la source (1) de tension continue ou de courant continu.

7. Module (3) gradateur suivant la revendication 1, **caractérisé en ce que** l'information sur la valeur de la résistance (R) est envoyée par voie séparée de la source (1) de tension continue ou de courant continu au module (3) gradateur.
